(19) Europäisches Patentamt
European Patent Office
Office européen des brevets

(11) **EP 4 343 593 B1**

(12) **EUROPEAN PATENT SPECIFICATION**

(45) Date of publication and mention
of the grant of the patent:
**15.04.2026   Bulletin 2026/16**

(51) International Patent Classification (IPC):
***G06F 21/53*** (2013.01)     ***G06F 21/74*** (2013.01)
***G06F 21/78*** (2013.01)

(21) Application number: **23190148.9**

(22) Date of filing: **07.08.2023**

(52) Cooperative Patent Classification (CPC):
**G06F 21/53; G06F 21/74; G06F 21/78**

(54) **METHOD, DEVICE, AND ELECTRONIC APPARATUS FOR SECURELY PASSING DATA**

VERFAHREN, VORRICHTUNG UND ELEKTRONISCHE VORRICHTUNG ZUR SICHEREN DATENWEITERLEITUNG

PROCÉDÉ, DISPOSITIF ET APPAREIL ÉLECTRONIQUE POUR LE TRANSFERT SÉCURISÉ DE DONNÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.09.2022   CN 202211141834
01.05.2023   US 202318310366
22.05.2023   KR 20230065819**

(43) Date of publication of application:
**27.03.2024   Bulletin 2024/13**

(73) Proprietor: **Samsung Electronics Co., Ltd.**
**Suwon-si, Gyeonggi-do 16677 (KR)**

(72) Inventors:
• **WANG, Peng**
  **XiAn (CN)**
• **LI, Min**
  **XiAn (CN)**
• **ZHANG, Hanbing**
  **XiAn (CN)**

(74) Representative: **Marks & Clerk LLP**
**15 Fetter Lane**
**London EC4A 1BW (GB)**

(56) References cited:
**US-A1- 2017 068 455     US-A1- 2018 113 817**

• **VAN BULCK JO JO VANBULCK@CS KULEUVEN BE ET AL: "A Tale of Two Worlds Assessing the Vulnerability of Enclave Shielding Runtimes", DESIGNING INTERACTIVE SYSTEMS CONFERENCE, ACM, 2 PENN PLAZA, SUITE 701NEW YORKNY10121-0701USA, 6 November 2019 (2019-11-06), pages 1741 - 1758, XP058638178, ISBN: 978-1-4503-5850-7, DOI: 10.1145/3319535.3363206**

**Description**

**TECHNICAL FIELD**

The present disclosure relates to the field of secure data, and more specifically relates to a method, a device, an electronic apparatus for securely passing data.

**DISCUSSION OF RELATED ART**

The ARM® TrustZone® technology divides a program execution environment into a Trusted Execution Environment (TEE) and a Rich Execution Environment (REE), and ensures that the Rich Execution Environment cannot access resources of the Trusted Execution Environment, thereby protecting code and data in the Trusted Execution Environment from malicious tampering and theft.

An application running in the REE may be referred to as a Client Application (CA), and an application running in the TEE may be referred to as a Trusted Application (TA). The CA can pass data to the TA using shared memory. The TA may validate data stored in the shared memory before it uses the data to perform an operation. However, when the TA reads data from the shared memory, a malicious CA can also access the shared memory and tamper with its contents. During a double fetch attack, the malicious CA attacks at the interval between the TA validating the data and using the data to bypass the validation so that malicious data can be passed to the shared memory for use by the TA.

Thus, there is need for a mechanism that allows data to be passed securely while preventing the double fetch attack.

Van Bulck Jo et al: "A Tale of Two Worlds: Assessing the Vulnerability of Enclave Shielding Runtimes", Designing Interactive Systems Conference, 6 November 2019, analyzes the vulnerability space arising in TEEs when interfacing a trusted enclave application with untrusted, potentially malicious code. The analysis reveals thirty-five enclave interface sanitization vulnerabilities in eight major open-source shielding frameworks for Intel SGX, RISC-V, and Sancus TEEs.

US 2018/113817 A1 discloses a data processing system that uses platform protection technology to protect some or all of the code and data belonging to certain software modules.

US 2017/068455 A1 discloses methods associated with application execution enclave cache management.

**SUMMARY**

According to an aspect of the invention, a method for passing data is provided according to claim 1. At least one embodiment of the present disclosure provides a method, a device and an electronic apparatus for securely passing data, which may protect against the Double Fetch attack.

According to an embodiment of the present disclosure, a method for passing data is provided. The method includes: in response to a client application (CA) calling a trusted application (TA) entry to pass data to a TA, a secure operating system allocates a cache area in trusted execution environment (TEE) to the data; the secure operating system copies the data from a pre-allocated shared memory to the cache area; and the secure operating system runs the TA entry so that the TA obtains the data from the cache area.

In an embodiment, a call parameter for the CA calling the TA entry includes an address of the data in the shared memory and a size of the data; the secure operating system running the TA entry includes: the secure operating system updating the address of the shared memory carried in the call parameter to an address of the cache area; and the secure operating system running the TA entry, wherein the call parameter for the TA entry includes the address of the data in the cache area and the size of the data, so that the TA obtains the data from the cache area.

In an embodiment, the secure operating system allocating the cache area in the trusted execution environment (TEE) to the data further includes: the secure operating system determining whether the size of the data exceeds a preset value; if the size of the data exceeds the preset value, returning an error to the CA; and if the size of the data does not exceed the preset value, allocating the cache area.

In an embodiment, the method further includes: determining whether the call parameter for the CA calling the TA entry includes indication information, where the indication information is used to indicate that the TA obtains the data from the shared memory; if the call parameter for the CA calling the TA entry includes the indication information, the secure operating system runs the TA entry so that the TA obtains the data from the shared memory; and if the call parameter for the CA calling the TA entry does not include the indication information, the secure operating system allocates the cache area to the data.

In an embodiment, the indication information is included in a parameter type ParamType of the call parameter, and the indication information is further used by the TA to perform an obfuscation attack check.

According to an embodiment of the present disclosure, a device for passing data is provided. The device comprises: a cache management unit, configured to: in response to a client application (CA) calling a trusted application

(TA) entry to pass data to a TA, allocate a cache area in trusted execution environment (TEE) to the data and copy the data from a pre-allocated shared memory to the cache area, by a secure operating system; and a processing unit, configured to run the TA entry by the secure operating system so that the TA obtains the data from the cache area.

In an embodiment, a call parameter for the CA calling the TA entry includes an address of the data in the shared memory and a size of the data; the processing unit is configured to run the TA entry by: updating the address of the shared memory carried in the call parameter to address of the cache area by the secure operating system; and running the TA entry using the secure operating system, wherein the call parameter for the TA entry includes the address of the data in the cache area and the size of the data, so that the TA obtains the data from the cache area.

In an embodiment, the cache management unit allocates the cache area in the trusted execution environment (TEE) to the data by: determining whether the size of the data exceeds a preset value, using the secure operating system; if the size of the data exceeds the preset value, returning an error to the CA; and if the size of the data does not exceed the preset value, allocating the cache area.

In an embodiment, the processing unit is further configured to: determine whether the call parameter for the CA calling the TA entry includes indication information, where the indication information is used to indicate that the TA obtains the data from the shared memory; if the call parameter for the CA calling the TA entry carries the indication information, running the TA entry by the secure operating system so that the TA obtains the data from the shared memory; and if the call parameter for the CA calling the TA entry does not include the indication information, allocating the cache area to the data by the secure operating system.

In an embodiment, the indication information is included in a parameter type ParamType of the call parameter, and the indication information is further used by the TA to perform an obfuscation attack check.

According to an embodiment of the present disclosure, an electronic apparatus is provided, the electronic apparatus including: at least one processor; and at least one storage storing computer-executable instructions, wherein, the computer-executable instructions, when executed by the at least one processor, cause the at least one processor to perform the method for passing data as described above.

According to an embodiment of the present disclosure, a computer-readable storage medium storing instructions is provided, wherein, the instructions, when executed by at least one processor, cause the at least one processor to perform the method for passing data as described above.

According to an embodiment of the present disclosure, an electronic apparatus is provided including a memory and a processor. The memory stores a first OS and the processor is configured to execute the first OS. The first OS is configured to receive a type from a second OS indicating whether to operate in a shadow buffer mode. The first OS is configured to copy data stored in a shared memory by a first application and shared between the first application and a second application to a shadow buffer, change an address used by the second application and referencing the data in the shared memory to reference the copied data in the shadow buffer, when the type indicates to operate in the shadow buffer mode.

In an embodiment, the first OS is a secure OS and the second OS is a rich OS. In an embodiment, the first application is a client application (CA) and the second application is a trusted application (TA). In an embodiment, the second application reads the data from the shadow buffer when the type indicates to operate in the shadow buffer mode using the changed address, in response to receiving a call from the first application to pass the data to the second application. In an application, the second application reads the data from the shared memory when the type does not indicate to operate in the shadow buffer mode, in response to receiving a call from the first application to pass the data to the second application. In an embodiment, the call includes an address of the data in the shared memory and a size of the data. In an embodiment, the first OS performs a logical AND operation on the type to determine whether to operate in the shadow buffer mode. In an embodiment, the type includes a first parameter not supported by the global platform (GP) specification when a result of the logical AND operation determines to operate in the shadow buffer mode. In an embodiment, the type further includes a second parameter supported by the GP. In an embodiment, the shadow buffer is located inside the first OS and the shared memory is located outside the first OS.

In an embodiment, the secure operating system, allocates a cache area (e.g., a shadow buffer), and before entering the TA, copies the data, which is to be passed by the CA to the TA, from the shared memory to the cache area. As a result, when the TA accesses the shared memory, it actually accesses its corresponding cache area. In this way, the data checked by the TA and the data finally obtained (Double Fetch) are all from the data copied to the cache area, and the data in the cache area is located in the TEE, which is a trusted environment. This therefore prevents an attack due to the data double fetched by the TA from the shared memory being inconsistent. Thus, even if the attacker tampers with the data in the shared memory in the REE, the TA can identify the tampered data during the checking phase, making the TA safe from attacks.

In an embodiment the present disclosure, the work of copying the data in the shared memory to the TEE area in advance is handed over to the secure operating system instead of each TA, to let the secure operating system build a barrier to protect various TAs running on the upper level, which can effectively avoid the Double Fetch vulnerability in TA from being attacked.

In addition, an embodiment of the present disclosure is compatible with a zero-copy shared memory mechanism while providing a secure shared memory mechanism for realizing a data pass through the cache area (e.g., a shadow cache or buffer), and has both increased security and performance. In an embodiment, the secure shared memory mechanism is adopted for all CAs and TAs (that is, allocating the cache area in the TEE to cache the data from the shared memory), and when the zero-copy shared memory mechanism needs to be used, additional settings may be made to applications (for example, the ParamType can be marked with a ZEROCOPY mask). Therefore, the technical solution proposed in the present disclosure can be easily and quickly applied to real products, and is especially friendly to applications that conform to the GlobalPlatform (GP) specification. That is to say, for regular TA services, secure protection can be obtained without modifying any code; for large data volume services that require high performance (that is, services that need to transmit a large amount of data and are sensitive to processing delays, such as decrypting digital media streams in DRM services), it is only necessary to mark the shared memory type in the corresponding CA and TA with a special mark (that is, add the ZEROCOPY mask), to make them follow the zero-copy method, that is, directly map to TA. In this service scenario, the data transmitted to the TA is usually only used for calculation, and the value of the data will not affect the TA's process, and it will not pose a threat even if the data is tampered with. Although an attacker may deliberately set this special mark in an attempt to bypass the above cache area (e.g., shadow cache), at least one of the above methods proposed can ensure that such an attack will not succeed.

In addition, at least one embodiment provided herein does not introduce new secure threats. Even if an attacker attempts to frequently call the TA entry to let the secure operating system allocate a large amount of cache area (e.g., a shadow cache or buffer) to exhaust the memory space of the secure operating system, given that the GP specification (see TEE Internal Core API Specification Version 1.1.2.50 chapter 2.1.3 for details) stipulates that an entry of a TA must be completed before the next one can be executed, therefore, when entering a TA entry, the previously allocated shadow cache has been released, and there is no problem of resource exhaustion. At the same time, the secure operating system may check a size of data of the shared memory included in the called TA entry. If the size of the data exceeds a preset value, the secure operating system may return an error to a CA to avoid possible attacks.

At least some of the above and other features of the invention are set out in the claims.

## BRIEF DESCRIPTION OF THE DRAWINGS

The above and other objects and features of the present disclosure will become apparent by describing in detail embodiments thereof with reference to the accompanying drawings.

FIG. 1 is a diagram illustrating a shared memory mechanism;
FIG. 2 illustrates a system for passing data according to an embodiment of the present disclosure;
FIG. 3 is a flowchart illustrating a method for passing data according to an embodiment of the present disclosure;
FIG. 4 is a flowchart illustrating a process for passing data from a CA to a TA by using a cache area according to an embodiment of the present disclosure;
FIG. 5 is a flowchart illustrating a process for passing data from a CA to a TA by directly using a shared memory according to an embodiment of the present disclosure;
FIG. 6 is a block diagram illustrating a device for securely passing data according to an embodiment of the present disclosure; and
FIG. 7 is a block diagram illustrating an electronic apparatus according to an embodiment of the present disclosure.

## DETAILED DESCRIPTION OF THE EMBODIMENTS

Below, embodiments of the present disclosure will be described in detail and clearly to such an extent that one skilled in the art may implement these embodiments. In the following description, specific details such as detailed components and structures are merely provided to assist the overall understanding of embodiments of the present disclosure.

Components that are described in the detailed description with reference to the terms "circuit", "block", etc. may be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, an inertial sensor, a micro electro mechanical system (MEMS), a passive element, or a combination thereof.

It should be noted that the terms "first" and "second" and so on in the specification and claims of the present disclosure and the above drawings are used to distinguish similar objects, and not necessarily used to describe a specific order or sequence. It should be understood that data used in this way may be interchanged under appropriate circumstances so that the embodiments of the present disclosure described herein may be implemented in an order other than those illustrated or described herein. The implementations described in the following embodiments do not represent all implementations consistent with the present disclosure. On the contrary, they are merely examples of devices and methods consistent with some aspects of the present disclosure as detailed in the appended claims.

It should be noted here that "at least one of several items" appearing in the present disclosure may mean three parallel cases: "any one of the several items", "a combination of any multiple of the several items", and "the entirety of the several items". For example, "including at least one of A and B", that is, includes the following three parallel cases: (1) including A; (2) including B; and (3) including A and B. For another example, "executing at least one of Step 1 and Step 2", that is, indicates the following three parallel cases: (1) executing Step 1; (2) executing Step 2; and (3) executing Step 1 and Step 2.

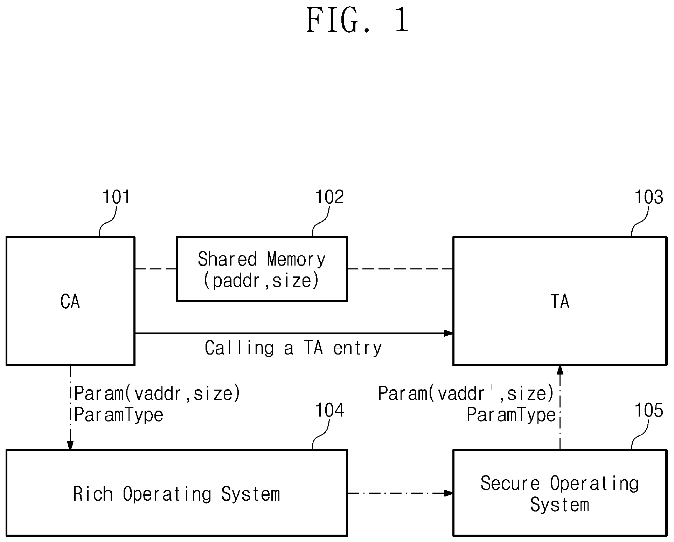

FIG. 1 shows a system that includes a CA 101, a shared memory 102, a TA 103, a Rich Operating System (OS) 104, and a Secure Operating System (OS) 105. The Rich OS 104 may be the "main" operating system of the device (e.g. a feature rich operating system). The Rich OS 104 may run alongside the Secure OS 105. The Rich OS may implement the CA 101. The Secure OS 105 (otherwise known as a Trusted OS) may implement secure functionality (e.g. managing the Trusted Execution Environment). The Secure OS 105 may implement the TA 103. To allow the CA 101 and the TA 103 to pass data to each other, the CA 101 allocates a memory area in the REE as shared memory 102 to share with the TA 103 before calling the TA 103. In addition, when the CA 101 calls a TA entry, the CA 101 passes an address (e.g., paddr), and a size of the data stored in the shared memory 102 and a parameter type to the TA 103 by call parameters (such as Param and ParamType defined by the GlobalPlatform (GP) specification). Then the TA 103 accesses the shared memory 102, and reads and uses the data in the shared memory 102 according to the information received from the CA 101.

Although use of the shared memory 102 avoids copying of data between the CA 101 and the TA 103, it also introduces security risks. Specifically, because of the shared nature of the shared memory 102, when the TA 103 accesses the shared memory 102, a malicious CA can tamper with the shared memory 102 at the same time (for example, through multi-thread concurrency of multi-core processors). In addition, if the tampering occurs between the process of the TA 103 checking data and the process of the TA 103 using the data, the process of the TA 103 checking data can be bypassed, and then malicious data may be passed into the TA 103 controlling an operation of the TA 103 operation and even controlling the entire TEE. This tampering may be referred to as a double fetch attack or a time-of-check to time-of-use (TOCTOU) attack.

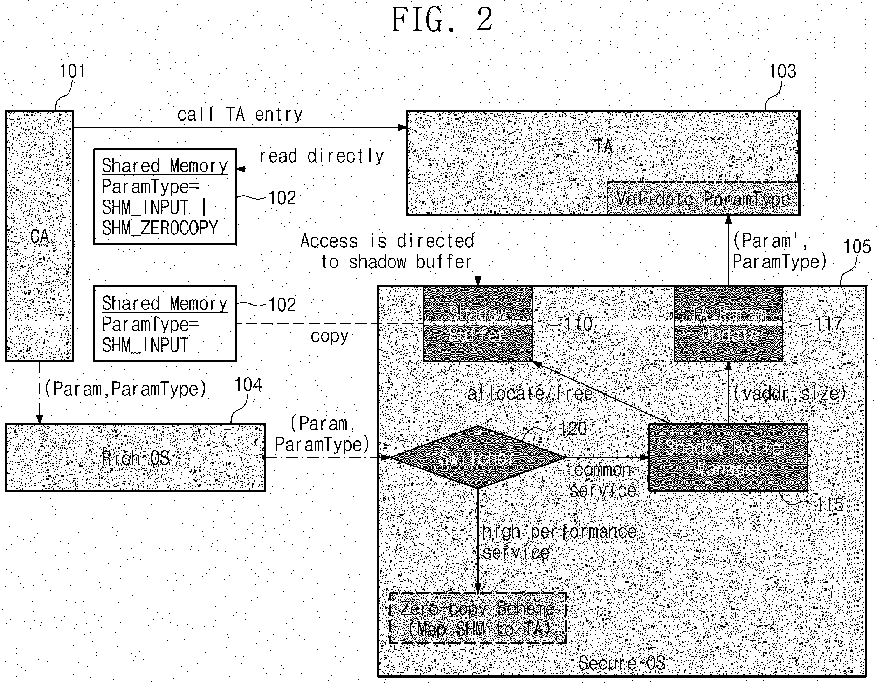

FIG. 2 illustrates a system according to an embodiment of the disclosure. In the system, the secure OS 105 includes a shadow buffer 110 (or a shadow cache, e.g., one or more registers or a memory device), shadow buffer manager 115 (e.g., an application), a TA Param Update unit 117 (e.g., an application), and a switcher 120 (e.g., an application). The system places the duty of guarding input data of the TA 103 on the secure OS 105 rather than developers of the TA 103. The system makes use of a shadow buffer 110 to back-up certain data stored in the shared memory 102. In certain cases where the TA 103 believes it is accessing the shared memory 102, the TA 103 is actually accessing the shadow buffer 110. If an attacker tries to tamper with the shared memory 102, the attacker will be unable to synchronize the malicious data to the shadow buffer 110 so that the TA 103 will not be affected. This shadow buffer scheme guarantees constant input to the TA 103 during the entire calling process.

Some services pass a large volume of data to the TA 103 via shared memory 102 and demand zero-copy for high performance such as during digital rights management (DRM) content decryption. Zero-copy may describe a restriction on the copies that can be made during data transfer (e.g. when data transfers the user-kernel boundary). Zero-copy may require that the kernel copy the data directly from the memory to the destination, without going through the application. Zero-copy can speed up data transfer by reducing the number of context switches between kernel and user mode (and therefore avoiding unnecessary data copies). Applying the shadow buffer 110 to this kind of service brings overhead due to the data copy operation that is performed. To address this issue, an embodiment of the disclosure uses a shared memory type for the developer of the TA 103 to mark so it can be determined whether zero-copy is needed. A zero-copy scheme is chosen when the shared memory type is marked and otherwise the shadow buffer scheme is chosen.

The shadow buffer 110 may be a secure memory temporally allocated in the secure OS 105. The shadow buffer 110 backs up data from the shared memory 102 (e.g., associated with the TEE and/or REE). Without knowledge of the TA 103, an access by the TA 103 to the shared memory 102 is re-directed to the shadow buffer 110 in certain cases.

The shadow buffer manager 115 may be in control of all operations of the shadow buffer 110 such as allocating, freeing, copying and mapping (i.e., to map a physical address to a user space of the TA 103).

The TA Param Update unit 117 may replace an address of the shared memory 102 in the parameter Param with a user address of the shadow buffer 110. For example, a TA Param Update unit 117 may change an address stored in a parameter stored in the TA 103 that is used by the TA 103 to access the shared memory 102. The TA 103 is not aware of this change and makes an access using the changed address in the parameter. Therefore, even though the TA 103 may assume it is accessing the shared memory 102 when it uses the address in the parameter, the TA 103 is actually accessing the shadow buffer 110 since the address has been changed by the TA Param Update unit 117 to instead reference the shadow buffer 110. Therefore, the TA 103 is stealthily redirected to the shadow buffer 110 without having to modify executable code of the TA 103.

The switcher 120 judges the shared memory type (e.g., ParamType) and makes a choice between the shadow buffer scheme and the zero-copy scheme. The Rich OS 104 may provide the shared memory type to the switcher 120. For example, if the ParamType includes a type label such as SHM_ZEROCOPY or a flag indicating the zero-copy scheme, the switcher 120 can conclude that a zero-copy scheme is needed. For example, if the ParamType does not include the type label or has a flag indicating the shadow buffer scheme, the switcher 120 can conclude that the shadow buffer scheme is needed. The type label may be combined in the ParamType with other existing types supported by the GP specification such as SHM_INPUT via a bitmap OR operation. For example, a shared memory with the existing type SHM_INPUT (i.e., TEEC_MEMREF_PARTUAL_INPUT in GP specification) can be marked as zero-copy by setting its type as follows: ParamType = SHM_INPUT | SHM_ZEROCOPY. For the entries of the TA 103 which have no demand for zero-copy, the new type can just be omitted and the existing code (e.g., SHM_INPUT) can be retained unchanged. The switcher 120 may judge whether the ParamType has the SHM_ZEROCOPY mask or not, via a bitmap AND operation. If the switcher 120 determines the ParamType has the SHM_ZEROCOPY mask, the switcher 120 takes the program to the original process which maps the shared memory 102 to the TA 103 directly for zero-copy. Otherwise, the switcher 120 activates the shadow buffer scheme.

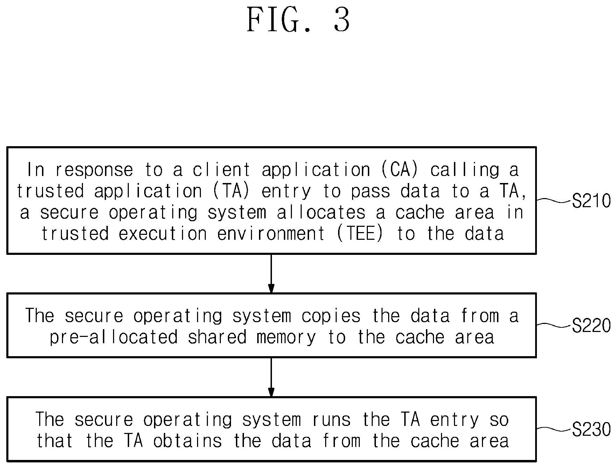

FIG. 3 is a flowchart illustrating a method for passing data according to an embodiment of the present disclosure.

Referring to FIG. 3, in step S210, in response to a client application (CA) calling a trusted application (TA) entry to pass data to a TA, a secure OS (e.g., 105) allocates a cache area in trusted execution environment (TEE) to the data.

In an embodiment of the present disclosure, before the CA 101 passes the data to the TA 103, the CA 101 allocates a memory area for the TA 103 in the REE as the shared memory 102, so as to pass the data to the TA 103. When the CA 101 calls the TA entry, the CA 101 passes the data, which it wants to pass to the TA 103, into this shared memory 102. As an example, the secure OS 105 may determine whether a call parameter for the CA 101 calling the TA entry of the TA 103 carries or includes indication information, which is used to indicate that the TA 103 obtains the data from the shared memory 102. If the call parameter for the CA 101 calling the TA entry carries or includes the indication information, the secure operating system runs the TA entry according to the indication information, so that the TA 103 obtains the data from the shared memory 102 directly. If the call parameter for the CA 101 calling the TA entry does not carry the indication information, the secure OS 105 allocates the cache area in the trusted execution environment (TEE) to the data as in step S210, so that TA 103 can use the cache area to obtain the data.

Specifically, the call parameter for the CA 101 calling the TA entry may include an address of the data in the shared memory 102 and a size of the data. Besides, the call parameter may further include a parameter type, that is to say, the CA 101 stores a physical address paddr of the data in the shared memory 102 and the size of the data in the parameter Param, configures the parameter type ParamType, and then calls the TA entry by using the parameter Param and the parameter type ParamType. That is to say, the call parameter may include the parameter Param and the parameter type ParamType. The parameter type ParamType may be a series of parameters defined by the GlobalPlatform (GP) specification for the CA 101 to call the TA 103, and exemplarily includes Input, Output, Reference, Value, etc. In addition, an embodiment of the present disclosure uses a new shared memory type. The new shared memory type adds indication information in the ParamType, and the indication information can be superimposed and combined with the memory shared types defined in the GP specification to perform a confusion attack check, and can also be used to indicate that TA 103 desires to obtain data from the shared memory 102.

For example, if the shared memory 102 needs to be used to pass data to the TA 103 directly, the CA 101 can mark the indication information for the ParamType by a bitwise OR operation according to the following equation (1), which can be referred to as a ZEROCOPY mask. That is to say, the above indication information may be included in the parameter type ParamType of the call parameter:

$$ParamType = INPUT\_SHM \mid ZEROCOPY \qquad (1)$$

wherein, INPUT_SHM corresponds to TEEC_MEMREF_PARTIAL_INPUT in the GP specification and | represents an OR operation.

In addition, if the cache area allocated by the secure OS 105 needs to be used to pass the data to the TA 103, the CA 101 can assign a value to the ParamType according to the following equation (2):

$$ParamType = INPUT\_SHM \qquad (2)$$

At this time, the ParamType does not include the above indication information. That is, before the step S210, the method for passing data may further include: determining whether the call parameter for the CA 101 calling the TA entry includes the above-mentioned indication information used to indicate that the TA 103 obtains the data from the shared memory 102. Specifically, the secure OS 105 can determine whether the call parameter includes the above-mentioned indication information according to the parameter type ParamType (that is, whether the parameter type ParamType carries or includes the above-mentioned indication information). That is, the secure OS 105 can determine whether the ParamType contains the ZEROCOPY mask by performing the bitwise AND operation on the parameter type ParamType and the ZEROCOPY, that is, determine whether the above-mentioned indication information is carried or included. In detail, if ParamType & ZEROCOPY is equal to ZEROCOPY, it means that the ParamType contains the ZEROCOPY mask, that is, it carries the above-mentioned indication information; otherwise, it means that the ParamType does not contain the ZEROCOPY mask, that is, it does not carry the above-mentioned indication information.

If the call parameter of the CA 101 calling the TA entry does not carry the above-mentioned indication information, the secure OS 105 may allocate the cache area in the TEE as described in the step S210.

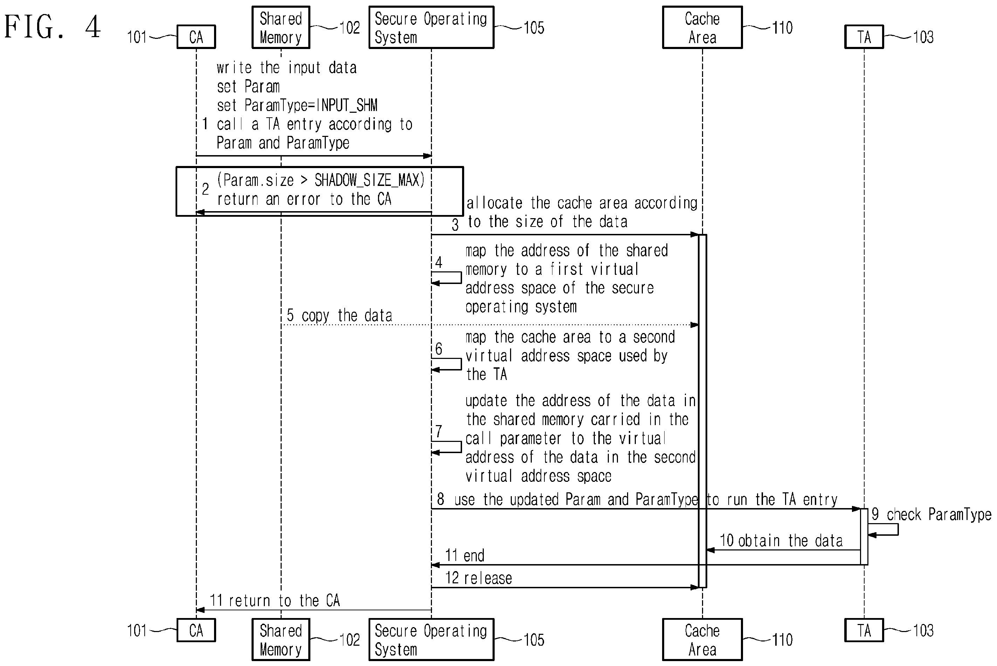

Thereafter, in step S220, the secure OS 105 copies the data from a pre-allocated shared memory 102 to the cache area, and in step S230, the secure OS 105 runs the TA entry so that the TA 103 obtains the data from the cache area. Steps S210 to S230 will be described in detail below with reference to an embodiment shown in FIG. 4.

FIG. 4 is a flowchart illustrating a process for passing the data from the CA 101 to the TA 103 by using the cache area according to an embodiment of the present disclosure.

In step 1 of FIG. 4, the CA 101 uses the above equation (2) to set the ParamType to INPUT_SHM instead of using the equation (1) to set the ParamType, that is, the ParamType does not carry the above indication information. Since other operations in step 1 of FIG. 4 have been described above with reference to FIG. 3, they will not be repeated here.

For the step S210, the secure OS 105 allocating the cache area in the TEE to the data may comprise: the secure OS 105 determining whether the size of the data exceeds a preset value; returning an error to the CA 101 if the size of the data exceeds the preset value; and allocating the cache area if the size of the data does not exceed the preset value.

Specifically, as shown in FIG. 4, in step 2, the secure OS 105 obtains the size Param.size of the data from the parameter Param, and then determines whether Param.size exceeds the preset value SHADOW_SIZE_MAX, where the preset value SHADOW_SIZE_MAX is configurable (e.g., by e.g., the secure OS 105 or a developer). When the size Param.size of the data exceeds the preset value SHADOW_SIZE_MAX, the secure OS 105 may directly return an error to the CA 104, and end the current process. When the size Param.size of the data does not exceed the preset value SHADOW_SIZE_MAX, in step 3, the secure OS 105 allocates the cache area according to the size Param.size of the data, and the cache area may be referred to as a shadow cache or shadow buffer (e.g., 110), wherein the size of the allocated cache area may be equal to the size Param.size of the data.

After the cache area is allocated, the secure OS 105 copies the data from the shared memory 102 to the cache area. In an embodiment of this process, it is first necessary to map the address of the shared memory 102 to a first virtual address space of the secure OS 105, and then copy the data from the shared memory 102 to the cache area.

Specifically, since the address of the data in the shared memory 102 obtained by the secure OS 105 from the CA 101 is the physical address paddr, and the secure OS 105 runs in the virtual address space, in order to read the data from the shared memory, the secure OS 105 needs to map the physical address of the shared memory into this virtual address space, and thus, in step 4 of FIG. 3, the secure OS 105 maps the address of the shared memory to a first virtual address space of the secure OS 105 to obtain first virtual address of the data in the first virtual address space. Then, in step 5, the secure OS 105 reads the data from the shared memory 102 according to the obtained first virtual address of the data in the first virtual address space, and copies the read data to the cache area. Although increasing the allocation and mapping of the cache area (i.e., shadow cache 110) and data copy operations in the secure OS 105 results in some additional overhead when the CA 101 calls the TA entry, the main factor for these additional overheads is usually not memory allocation and mapping, but data copy, and the present embodiment limits the size of the data copy from the shared memory 102 to the cache area through a system configurable parameter SHADOW_SIZE_MAX, which can control the introduced overhead to an acceptable level, where the resulting security increase may be worthwhile compared to the increase in overhead.

After copying the data from the shared memory 102 to the cache area, the secure OS 105 will run the TA entry. Specifically, the secure OS 105 running the TA entry may comprise: the secure OS 105 updating the address of the shared memory 102 carried in the call parameter to an address of the cache area; and the secure OS 105 running the TA entry, wherein the call parameter for the TA entry carries the address of the data in the cache area and the size of the data, so that the TA 103 obtains the data from the cache area.

Specifically, although the TA 103 runs in the trusted execution environment where the secure OS 105 is located, the TA 103 uses a different virtual address space from that used by the secure OS 105. Therefore, it may be necessary to map the memory spaces used by both of them. As shown in FIG. 4, in step 6, the secure OS 105 maps the cache area to a second virtual address space used by the TA 103, so as to obtain a virtual address of the cache area in the second virtual address space, and then obtain a virtual address of the data in the second virtual address space. Then in step 7, the secure OS 105 updates the address Param.paddr of the data in the shared memory 102 carried in the call parameter to the virtual address of the data in the second virtual address space, and after that, in step 8, the secure OS 105 uses the updated parameter Param and the parameter type ParamType to run the TA entry, that is, pass the Param and the ParamType into the TA 103. Thereafter, as shown in FIG. 4, after the parameter Param of the TA entry and the parameter type ParamType are passed into the TA entry, in step 9, the TA 103 routinely or periodically checks the parameter type ParamType. If the ParamType is found to be abnormal, the current process is terminated and an error is returned to the CA 101. If the ParamType is found to be normal, in step 10, the TA 103 obtains the data from the cache area according to the updated parameter Param, that is, determines the memory space where the data needs to be read, according to the updated Param.paddr, and then reads the data from this memory space.

The method for passing data further includes: when the execution of the TA entry ends, releasing the mapping from the cache area to the second virtual address space, and releasing the cache area, by the secure OS 105.

Specifically, as shown in FIG. 4, in step 11, the execution of the TA entry program ends and returns to the secure OS 105. Then in step 12, the secure OS 105 releases the mapping from the cache area to the second virtual address space, releases the cache area, and then returns to the CA 101 in step 13.

In the above process, an embodiment of the present disclosure, through the secure OS 105, allocates the cache area (i.e., the shadow buffer 110), and before entering the TA 103, copies the data, which is to be passed by the CA 101 to the TA 103, from the shared memory 102 to the cache area. As a result, when the TA 103 accesses the shared memory 102, it actually accesses its corresponding cache area, and at this time, the attacker tampered with the data in the shared memory 102 in the REE, but the data checked by the TA 103 and the data finally obtained (Double Fetch) are all from the data copied to the cache area, and the data in the cache area is located in the TEE, which is a trusted environment, and the problem of being attacked due to the data double fetched by the TA 103 from the shared memory 102 is inconsistent will not occur. Thus, even if the attacker tampers with the data in the shared memory 102 in the REE, the TA 103 can identify the tampered data during the checking phase, making the TA 103 safe from attacks. In an embodiment of the present disclosure, the work of copying the data in the shared memory 102 to the TEE area in advance is handed over to the secure OS 105 instead of the TA 103, to let the secure OS 105 build a barrier to protect various TAs running on the upper level, which can effectively avoid the Double Fetch vulnerability in the TA 103 from being attacked.

In addition, an embodiment of the present disclosure is compatible with the existing zero-copy shared memory mechanism while providing the above secure shared memory mechanism, and has both increased security and performance. This is described in detail below.

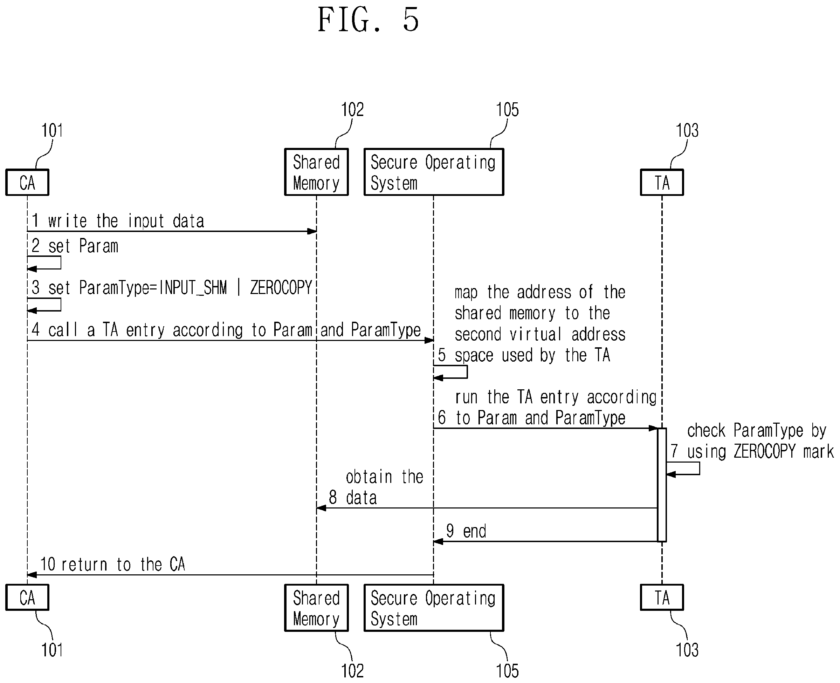

That is to say, before the step S210, if it is determined that the call parameter for the CA 101 calling the TA entry carries the above-mentioned indication information for indicating that the TA 103 obtains the data from the shared memory 102, the secure OS 105 runs the TA entry so that the TA 103 obtains the data from the shared memory 102. This is described in detail below with reference to FIG. 5.

FIG. 5 is a flowchart illustrating a process for passing data from a CA 101 to a TA 103 by directly using a shared memory 102 according to an embodiment of the present disclosure.

Step 1, step 2 and step 4 in FIG. 5 are the same as the corresponding operations in step 1 described above with reference to FIG. 4, so they will not be repeated here. In step 3 of FIG. 5, the CA 101 sets the ParamType to INPU_SHM| ZEROCOPY using the equation (1) above, instead of setting the ParamType using the equation (2). In step 5, the address of the shared memory 102 is mapped to the second virtual address space used by the TA 103 to obtain the virtual address of the data in the second virtual address space, and the address paddr of the data in the shared memory 102 in the parameter Param is updated to the virtual address of the data in the second virtual address space. Then in step 6, the TA entry is run by using the updated parameter Param and the parameter type ParamType, that is, passing the updated Param and ParamType into the TA 103.

After that, in step 7, the parameter type ParamType is checked by the TA 103, that is, on the basis of the original ParamType check, the check of the ZEROCOPY mask is added, that is, the confusion attack check is performed. If the check fails, the TA 1 03 terminates the process and returns to the CA 101, thereby preventing obfuscation attacks. If the check is successful, in step 8, the TA 103 obtains the data from the shared memory 102 according to the virtual address of the data in the second virtual address space. Then in step 9, the operation of the TA entry ends and returns to the secure OS 105, and in step 10 returns to the CA 101.

The above solution proposed in the present disclosure can be used for special marking of the shared memory 102 for services that need to transmit a large amount of data to the TA 103 and are sensitive to the TA's processing delays (such as decrypting digital media streams in DRM services), to make them follow the zero-copy method, that is, directly map to TA 103. In this service scenario, the data transmitted to the TA 103 is usually only used for calculation, and the value of the data will not affect the TA's process, and it will not pose a threat even if the data is tampered with. Although an attacker may deliberately set this special mark in an attempt to bypass the above cache area (i.e., shadow buffer 110), the above method proposed in the present disclosure can ensure that such an attack will not succeed.

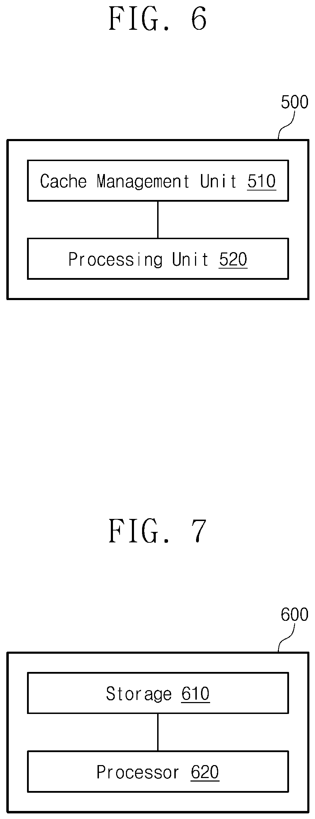

FIG. 6 is a block diagram illustrating a device 500 for passing data according to an embodiment of the present disclosure.

Referring to FIG. 6, the device 500 may include a cache management unit 510 (e.g., a processor or a logic circuit) and a processing unit 520 (e.g., a processor or a logic circuit). Specifically, the cache management unit 510 may be configured to: in response to a CA 101 calling a TA entry to pass data to a TA 103, allocate a cache area in a TEE to the data and copy the data from a pre-allocated shared memory 102 to the cache area, by a secure OS 105. The processing unit 520 may be configured to run the TA entry by the secure OS 105 so that the TA 103 obtains the data from the cache area.

Call parameter for the CA 101 calling the TA entry carries an address of the data in the shared memory 102 and a size of the data. The processing unit 520 may be configured to run the TA entry by: updating the address of the shared memory 102 carried in the call parameter to address of the cache area by the secure OS 105; and running the TA entry by the secure OS 105, wherein the call parameter for the TA entry carries the address of the data in the cache area and the size of the data, so that the TA 103 obtains the data from the cache area.

The cache management unit 510 may allocate the cache area in the TEE to the data by: determining whether the size of the data exceeds a preset value, by the secure OS 105; returning an error to the CA 101 if the size of the data exceeds the preset value; and allocating the cache area if the size of the data does not exceed the preset value.

The processing unit 520 is further configured to: determine whether the call parameter for the CA 101 calling the TA entry carries indication information, where the indication information is used to indicate that the TA 103 obtains the data from the shared memory 102; if the call parameter for the CA 101 calling the TA entry carries the indication information, running the TA entry by the secure OS 105 so that the TA 103 obtains the data from the shared memory 102; and if the call parameter for the CA 101 calling the TA entry does not carry the indication information, allocating the cache area to the data by the secure OS 105.

The indication information is carried in a parameter type ParamType of the call parameter, and the indication information may be further used by the TA 103 to perform an obfuscation attack check.

Since the method for passing data shown in FIG. 3 can be performed by the device 500 for passing data shown in FIG. 6, for any relevant details involved in the operations performed by the units in FIG. 6, reference may be made to the above corresponding description, which will not be repeated here.

FIG. 7 is a block diagram of an electronic apparatus 600 according to an embodiment of the present disclosure.

Referring to FIG. 7, the electronic apparatus 600 may comprise at least one storage 610 and at least one processor 620, wherein the at least one storage 610 stores computer-executable instructions, and the computer-executable instructions, when executed by the at least one processor 620, cause the at least one processor 620 to perform a method for passing data according to embodiments of the present disclosure.

The processor 620 may include one or more processors. At this time, the one or more processors may be general-purpose processors, such as central processing units (CPUs), application processors (APs), etc., processors only used for graphics, such as graphics processing units (GPUs), vision processors (VPU) and/or AI-specific processors.

As an example, the electronic apparatus may be a PC computer, a tablet device, a personal digital assistant, a smart phone, or other devices capable of executing the above set of instructions. Here, the electronic apparatus does not have to be a single electronic apparatus and may also be any device or a collection of circuits that may execute the above instructions (or instruction sets) individually or jointly. The electronic apparatus may also be a part of an integrated control system or a system manager, or may be configured as a portable electronic apparatus interconnected by an interface with a local or remote (e.g., via wireless transmission).

In the electronic apparatus, the processor may include a central processing unit (CPU), a graphics processing unit (GPU), a programmable logic device, a dedicated processor system, a microcontroller, or a microprocessor. As an example, the processor may also include an analog processor, a digital processor, a microprocessor, a multi-core processor, a processor array, a network processor, and the like.

The processor 620 may execute instructions or codes stored in the memory, where the memory may also store data. Instructions and data may also be transmitted and received through a network via a network interface device, wherein the network interface device may use any known transmission protocol.

The memory may be integrated with the processor as a whole, for example, RAM or a flash memory is arranged in an integrated circuit microprocessor or the like. In addition, the memory may include an independent device, such as an external disk drive, a storage array, or other storage device that may be used by any database system. The memory and the processor may be operatively coupled, or may communicate with each other, for example, through an I/O port, a network connection, or the like, so that the processor may read files stored in the memory.

In addition, the electronic apparatus may also include a video display (such as a liquid crystal display) and a user interaction interface (such as a keyboard, a mouse, a touch input device, etc.). All components of the electronic apparatus may be connected to each other via a bus and/or a network.

According to an embodiment of the present disclosure, there may also be provided a computer-readable storage medium storing instructions, wherein the instructions, when executed by at least one processor, cause the at least one processor to execute the method for passing data according to the embodiment of the present disclosure. Examples of the computer-readable storage medium here include: Read Only Memory (ROM), Random Access Programmable Read Only Memory (PROM), Electrically Erasable Programmable Read Only Memory (EEPROM), Random Access Memory (RAM), Dynamic Random Access Memory (DRAM), Static Random Access Memory (SRAM), flash memory, non-volatile memory, CD-ROM, CD-R, CD+R, CD-RW, CD+RW, DVD-ROM , DVD-R, DVD+R, DVD-RW, DVD+RW, DVD-RAM, BD-ROM, BD-R, BD-R LTH, BD-RE, Blu-ray or optical disc storage, Hard Disk Drive (HDD), Solid State Drive (SSD), card storage (such as multimedia card, secure digital (SD) card or extremely fast digital (XD) card), magnetic tape, floppy disk, magneto-optical data storage device, optical data storage device, hard disk, solid state disk and any other devices which are configured to store computer programs and any associated data, data files, and data structures in a non-transitory manner, and provide the computer programs and any associated data, data files, and data structures to the processor or the computer, so that the processor or the computer may execute the computer programs. The instructions and the computer programs in the above computer-readable storage mediums may run in an environment deployed in computer equipment such as a client, a host, an agent device, a server, etc. In addition, in one example, the computer programs and any associated data, data files and data structures are distributed on networked computer systems, so that computer programs and any associated data, data files, and data structures are stored, accessed, and executed in a distributed manner through one or more processors or computers.

While the present disclosure has been described with reference to embodiments thereof, it will be apparent to those of ordinary skill in the art that various changes and modifications may be made thereto without departing from the scope of the present disclosure as set forth in the following claims.

**Claims**

1.  A method for passing data, comprises:

    allocating (S210), by a secure operating system, OS, a cache area in a trusted execution environment to data in response to a client application, CA, calling a trusted application, TA, entry to pass the data;
    copying (S220), by the secure OS, the data from a pre-allocated shared memory to the cache area; and
    after copying the data from the shared memory to the cache area, running (S230), by the secure OS, the TA entry so that the TA performs a check on the data in the cache area to identify tampered data and then obtains the data from the cache area if no tampered data is identified.

2.  The method for passing data according to claim 1, wherein:

    a call parameter for the CA calling the TA entry includes an address of the data in the shared memory and a size of the data;
    the secure OS running the TA entry comprises updating, by the secure operating system, the address of the shared memory included in the call parameter to an address of the cache area;
    the call parameter for the TA entry includes the address of the data in the cache area and the size of the data, to enable the TA to obtain the data from the cache area.

3.  The method for passing data according to claim 2, wherein, the secure OS allocating the cache area in the trusted execution environment to the data further comprises:

    determining, by the secure operating system, whether the size of the data exceeds a preset value;
    if the size of the data exceeds the preset value, the secure OS returning an error to the CA; and
    if the size of the data does not exceed the preset value, the secure OS allocating the cache area.

4.  The method for passing data according to claim 2 or claim 3, wherein, the method further comprises:

    determining whether the call parameter for the CA calling the TA entry includes indication information, where the indication information is used to indicate that the TA obtains the data from the shared memory;
    the secure operating system running the TA entry so that the TA obtains the data from the shared memory if the call parameter for the CA calling the TA entry includes the indication information; and
    the secure operating system allocating the cache area to the data if the call parameter for the CA calling the TA entry does not carry the indication information.

5.  The method for passing data according to claim 4, wherein, the indication information is included in a parameter type of the call parameter, and the indication information is further used by the TA to perform an obfuscation attack check.

6.  An electronic apparatus, comprising:

    a memory storing a first operating system, OS, wherein the first OS is a secure OS; and
    a processor configured to execute the first OS, to perform the following steps:

        allocating (S210) a cache area in a trusted execution environment to data in response to a client application, CA, calling a trusted application, TA, entry to pass the data;

copying (S220) the data from a pre-allocated shared memory to the cache area; and

after copying the data from the shared memory to the cache area, running (S230) the TA entry so that the TA performs a check on the data in the cache area to identify tampered data and then obtains the data from the cache area if no tampered data is identified.

7. The electronic apparatus according to claim 6 wherein:

the first OS is configured to receive a type from a second OS indicating whether to operate in a shadow buffer mode;

the cache is a shadow buffer;

the first OS is configured to copy data stored in the shared memory by the client application and shared between the client application and the trusted application to the shadow buffer, change an address used by the trusted application and referencing the data in the shared memory to reference the copied data in the shadow buffer, when the type indicates to operate in the shadow buffer mode.

8. The electronic apparatus of claim 7, wherein the second OS is a rich OS.

9. The electronic apparatus of claims 7 or 8, wherein the trusted application is configured to read the data from the shadow buffer when the type indicates to operate in the shadow buffer mode using the changed address, in response to receiving a call from the client application to pass the data to the trusted application.

10. The electronic apparatus of claim 9, wherein the trusted application is configured to read the data from the shared memory when the type does not indicate to operate in the shadow buffer mode, in response to receiving a call from the client application to pass the data to the trusted application.

11. The electronic apparatus of claim 10, wherein the call includes an address of the data in the shared memory and a size of the data.

12. The electronic apparatus of any of claims 7-11, wherein the first OS is configured to perform a logical AND operation on the type to determine whether to operate in the shadow buffer mode.

13. The electronic apparatus of claim 12, wherein the type includes a first parameter not supported by the global platform specification when a result of the logical AND operation determines to operate in the shadow buffer mode.

14. The electronic apparatus of claim 13, wherein the type further includes a second parameter supported by the global platform.

15. The electronic apparatus of any of claims 7-14, wherein the shadow buffer is located inside the first OS and the shared memory is located outside the first OS.

**Patentansprüche**

1. Verfahren zum Weiterleiten von Daten, umfassend:

Zuweisen (S210) eines Cache-Bereichs in einer vertrauenswürdigen Ausführungsumgebung zu Daten als Antwort auf eine Clientanwendung, CA, welche einen Eintrag einer vertrauenswürdigen Anwendung, TA, aufruft, die Daten weiterzuleiten, durch ein sicheres Betriebssystem, OS;

Kopieren (S220) der Daten aus einem vorab zugewiesenen gemeinsamen Speicher in den Cache-Bereich durch das sichere OS; und

nach Kopieren der Daten aus dem gemeinsamen Speicher in den Cache-Bereich, Ausführen (S230) des TA-Eintrags durch das sichere OS, sodass die TA eine Überprüfung der Daten in dem Cache-Bereich durchführt, um manipulierte Daten zu identifizieren, und die Daten dann aus dem Cache-Bereich erhält, wenn keine manipulierten Daten identifiziert werden.

2. Verfahren zum Weiterleiten von Daten nach Anspruch 1, wobei:

ein Aufrufparameter für die CA, welcher den TA-Eintrag aufruft, eine Adresse der Daten in dem gemeinsamen Speicher und eine Größe der Daten beinhaltet;

das Ausführen des TA-Eintrags durch das sichere OS Aktualisieren der in dem Aufrufparameter beinhalteten Adresse des gemeinsam genutzten Speichers auf eine Adresse des Cache-Bereichs durch das sichere Betriebssystem umfasst;

der Aufrufparameter für den TA-Eintrag die Adresse der Daten in dem Cache-Bereich und die Größe der Daten beinhaltet, um der TA zu ermöglichen, die Daten aus dem Cache-Bereich zu erhalten.

3. Verfahren zum Weiterleiten von Daten nach Anspruch 2, wobei Zuweisen des Cache-Bereichs in der vertrauenswürdigen Ausführungsumgebung zu den Daten durch das sichere OS weiter umfasst:

Bestimmen, ob die Größe der Daten einen voreingestellten Wert überschreitet, durch das sichere Betriebssystem;

falls die Größe der Daten den voreingestellten Wert überschreitet, Zurücksenden einer Fehlermeldung an die CA durch das sichere OS; und

falls die Größe der Daten den voreingestellten Wert nicht überschreitet, Zuweisen des Cache-Bereichs durch das sichere OS.

4. Verfahren zum Weiterleiten von Daten nach Anspruch 2 oder 3, wobei das Verfahren weiter umfasst:

Bestimmen, ob der Aufrufparameter für die CA, welcher den TA-Eintrag aufruft, Indikationsinformationen beinhaltet, wobei die Indikationsinformationen dazu verwendet werden, anzuzeigen, dass die TA die Daten aus dem gemeinsamen Speicher erhält;

Ausführen des TA-Eintrags durch das sichere Betriebssystem, sodass die TA die Daten aus dem gemeinsamen Speicher erhält, falls der Aufrufparameter für die CA, welche den TA-Eintrag aufruft, die Indikationsinformationen beinhaltet; und

Zuweisen des Cache-Bereichs zu den Daten durch das sichere Betriebssystem, falls der Aufrufparameter für die CA, welche den TA-Eintrag aufruft, keine Indikationsinformationen enthält.

5. Verfahren zum Weiterleiten von Daten nach Anspruch 4, wobei die Indikationsinformationen in einem Parametertyp des Aufrufparameters beinhaltet sind, und die Indikationsinformationen von der TA weiter zum Durchführen einer Überprüfung auf Verschleierungsangriffe verwendet werden.

6. Elektronische Einrichtung, umfassend:

einen Speicher, welcher ein erstes Betriebssystem, OS, speichert, wobei das erste OS ein sicheres OS ist; und

einen Prozessor, welcher dazu konfiguriert ist, das erste OS auszuführen, um die folgenden Schritte durchzuführen:

Zuweisen (S210) eines Cache-Bereichs in einer vertrauenswürdigen Ausführungsumgebung zu Daten als Antwort auf eine Clientanwendung, CA, welche einen Eintrag einer vertrauenswürdigen Anwendung, TA, aufruft, die Daten weiterzuleiten;

Kopieren (S220) der Daten aus einem vorab zugewiesenen gemeinsamen Speicher in den Cache-Bereich; und

nach Kopieren der Daten aus dem gemeinsamen Speicher in den Cache-Bereich, Ausführen (S230) des TA-Eintrags, sodass die TA eine Überprüfung der Daten in dem Cache-Bereich durchführt, um manipulierte Daten zu identifizieren, und die Daten dann aus dem Cache-Bereich erhält, wenn keine manipulierten Daten identifiziert werden.

7. Elektronische Einrichtung nach Anspruch 6, wobei:

das erste OS dazu konfiguriert ist, von einem zweiten OS einen Typ zu empfangen, welcher angibt, ob es im Schattenpuffermodus arbeiten soll;

der Cache ein Schattenpuffer ist;

das erste OS dazu konfiguriert ist, Daten, welche von der Clientanwendung in dem gemeinsamen Speicher gespeichert und zwischen der Clientanwendung und der vertrauenswürdigen Anwendung geteilt werden, in den Schattenpuffer zu kopieren, eine von der vertrauenswürdigen Anwendung verwendete Adresse zu ändern und auf die Daten in dem gemeinsamen Speicher zu verweisen, um auf die kopierten Daten in dem Schattenpuffer zu verweisen, wenn der Typ angibt, im Schattenpuffermodus zu arbeiten.

8.  Elektronische Einrichtung nach Anspruch 7, wobei das zweite OS ein Rich OS ist.

9.  Elektronische Einrichtung nach Ansprüchen 7 oder 8, wobei die vertrauenswürdige Anwendung dazu konfiguriert ist, als Antwort auf Empfangen eines Aufrufs der Clientanwendung, die Daten an die vertrauenswürdige Anwendung weiterzuleiten, die Daten aus dem Schattenpuffer zu lesen, wenn der Typ angibt, unter Verwendung der geänderten Adresse im Schattenpuffermodus zu arbeiten.

10. Elektronische Einrichtung nach Anspruch 9, wobei die vertrauenswürdige Anwendung dazu konfiguriert ist, als Antwort auf Empfangen eines Aufrufs der Clientanwendung, die Daten an die vertrauenswürdige Anwendung weiterzuleiten, die Daten aus dem gemeinsamen Speicher zu lesen, wenn der Typ nicht angibt, im Schattenpuffermodus zu arbeiten.

11. Elektronische Einrichtung nach Anspruch 10, wobei der Aufruf eine Adresse der Daten in dem gemeinsamen Speicher und eine Größe der Daten beinhaltet.

12. Elektronische Einrichtung nach einem der Ansprüche 7-11, wobei das erste OS dazu konfiguriert ist, eine logische UND-Verknüpfung des Typs durchzuführen, um zu bestimmen, ob im Schattenpuffermodus gearbeitet werden soll.

13. Elektronische Einrichtung nach Anspruch 12, wobei der Typ einen ersten Parameter beinhaltet, welcher von der globalen Plattformspezifikation nicht unterstützt wird, wenn ein Ergebnis der logischen UND-Verknüpfung bestimmt, dass im Schattenpuffermodus gearbeitet werden soll.

14. Elektronische Einrichtung nach Anspruch 13, wobei der Typ weiter einen zweiten Parameter beinhaltet, welcher von der globalen Plattform unterstützt wird.

15. Elektronische Einrichtung nach einem der Ansprüche 7-14, wobei sich der Schattenpuffer innerhalb des ersten OS befindet und sich der gemeinsame Speicher außerhalb des ersten OS befindet.

**Revendications**

1.  Procédé de transmission de données comprenant :

    l'allocation (S210), par un système d'exploitation sécurisé, OS, d'une zone de cache dans un environnement d'exécution de confiance à des données en réponse au fait qu'une application client, CA, appelle une entrée d'application de confiance, TA, pour transmettre les données ;
    la copie (S220), par l'OS sécurisé, des données d'une mémoire partagée pré-allouée dans la zone de cache ; et
    après la copie des données de la mémoire partagée dans la zone de cache, l'exécution (S230), par l'OS sécurisé, de l'entrée TA afin que la TA réalise une vérification des données dans la zone de cache pour identifier des données altérées, puis obtienne les données de la zone de cache si aucune donnée altérée n'est identifiée.

2.  Procédé de transmission de données selon la revendication 1, dans lequel :

    un paramètre d'appel pour le CA appelant l'entrée TA inclut une adresse des données dans la mémoire partagée et une taille des données ;
    l'OS sécurisé exécutant l'entrée TA comprend la mise à jour, par le système d'exploitation sécurisé, de l'adresse de la mémoire partagée incluse dans le paramètre d'appel à une adresse de la zone de cache ;
    le paramètre d'appel pour l'entrée TA inclut l'adresse des données dans la zone de cache et la taille des données, afin de permettre à la TA d'obtenir les données de la zone de cache.

3.  Procédé de transmission de données selon la revendication 2, dans lequel l'OS sécurisé allouant la zone de cache dans l'environnement d'exécution de confiance aux données comprend en outre :

    la détermination, par l'OS sécurisé, si la taille des données dépasse une valeur prédéfinie ;
    si la taille des données dépasse la valeur prédéfinie, l'OS sécurisé renvoyant une erreur à la CA ; et
    si la taille des données ne dépasse pas la valeur prédéfinie, l'OS sécurisé allouant la zone de cache.

4.  Procédé de transmission de données selon la revendication 2 ou la revendication 3, le procédé comprenant en outre :

la détermination si le paramètre d'appel de la CA appelant l'entrée TA inclut des informations d'indication, où les informations d'indication servent à indiquer que la TA obtient les données de la mémoire partagée ;

l'OS sécurisé exécutant l'entrée TA afin que la TA obtienne les données de la mémoire partagée si le paramètre d'appel de la CA appelant l'entrée TA inclut les informations d'indication ; et

le système d'exploitation sécurisé allouant la zone de cache aux données si le paramètre d'appel de la CA appelant l'entrée de transaction ne contient pas les informations d'indication.

5. Procédé de transmission de données selon la revendication 4, dans lequel les informations d'indication sont incluses dans un type de paramètre du paramètre d'appel, et les informations d'indication sont en outre utilisées par la TA pour réaliser une vérification d'attaque d'obfuscation.

6. Appareil électronique, comprenant :

une mémoire stockant un premier système d'exploitation, OS, dans lequel le premier OS est un OS sécurisé ; et
un processeur configuré pour exécuter le premier OS, afin de réaliser les étapes suivantes :

l'allocation (S210) d'une zone de cache dans un environnement d'exécution de confiance aux données en réponse à une application client, CA, appelant une entrée d'application de confiance, TA, pour transmettre les données ;
la copie (S220) des données d'une mémoire partagée pré-allouée dans la zone de cache ; et
après la copie des données de la mémoire partagée dans la zone de cache, l'exécution (S230) de l'entrée TA afin que la TA réalise une vérification des données dans la zone de cache pour identifier des données altérées, puis obtienne les données de la zone de cache si aucune donnée altérée n'est identifiée.

7. Appareil électronique selon la revendication 6, dans lequel :

le premier OS est configuré pour recevoir un type d'un second OS indiquant s'il doit fonctionner en mode de mémoire tampon fantôme ;
le cache est une mémoire tampon fantôme ;
le premier OS est configuré pour copier des données stockées dans la mémoire partagée par l'application client et partagées entre l'application client et l'application de confiance dans la mémoire tampon fantôme, modifier une adresse utilisée par l'application de confiance et faisant référence aux données dans la mémoire partagée pour faire référence aux données copiées dans la mémoire tampon fantôme, lorsque le type indique de fonctionner en mode de mémoire tampon fantôme.

8. Appareil électronique selon la revendication 7, dans lequel le second OS est un OS riche.

9. Appareil électronique selon la revendication 7 ou 8, dans lequel l'application de confiance est configurée pour lire les données de la mémoire tampon fantôme lorsque le type indique de fonctionner en mode de mémoire tampon fantôme à l'aide de l'adresse modifiée, en réponse à la réception d'un appel de l'application client pour transmettre les données à l'application de confiance.

10. Appareil électronique selon la revendication 9, dans lequel l'application de confiance est configurée pour lire les données de la mémoire partagée lorsque le type n'indique pas de fonctionner en mode de mémoire tampon fantôme, en réponse à la réception d'un appel de l'application client pour transmettre les données à l'application de confiance.

11. Appareil électronique selon la revendication 10, dans lequel l'appel inclut une adresse des données dans la mémoire partagée et une taille des données.

12. Appareil électronique selon l'une quelconque des revendications 7-11, dans lequel le premier OS est configuré pour réaliser une opération ET logique sur le type afin de déterminer s'il doit fonctionner en mode de mémoire tampon fantôme.

13. Appareil électronique selon la revendication 12, dans lequel le type inclut un premier paramètre non pris en charge par la spécification de plateforme globale lorsqu'un résultat de l'opération ET logique détermine de fonctionner en mode de mémoire tampon fantôme.

14. Appareil électronique selon la revendication 13, dans lequel le type inclut en outre un second paramètre pris en charge par la plateforme globale.

15. Appareil électronique selon l'une quelconque des revendications 7-14, dans lequel la mémoire tampon fantôme est située à l'intérieur du premier OS et la mémoire partagée est située à l'extérieur du premier OS.

# FIG. 1

EP 4 343 593 B1

101

CA

102

Shared Memory
(paddr,size)

103

TA

Calling a TA entry

Param(vaddr,size)
ParamType

Param(vaddr',size)
ParamType

104

Rich Operating System

105

Secure Operating
System

# FIG. 2

CA 101

call TA entry →

Shared Memory
ParamType=
SHM_INPUT |
SHM_ZEROCOPY
102

← read directly

TA 103

Validate ParamType

(Param',
ParamType)
105

Access is directed
to shadow buffer

Shared Memory
ParamType=
SHM_INPUT
102

copy

Shadow
Buffer
110

TA Param
Update
117

(Param,ParamType)

(vaddr,size)

Rich OS 104

(Param,
ParamType)

allocate/free

Switcher 120

common
service

Shadow Buffer
Manager
115

high performance
service

Zero-copy Scheme
(Map SHM to TA)

Secure OS

EP 4 343 593 B1

# FIG. 3

In response to a client application (CA) calling a trusted application (TA) entry to pass data to a TA, a secure operating system allocates a cache area in trusted execution environment (TEE) to the data ⌐S210

The secure operating system copies the data from a pre-allocated shared memory to the cache area ⌐S220

The secure operating system runs the TA entry so that the TA obtains the data from the cache area ⌐S230

FIG. 4

EP 4 343 593 B1

101 — CA  
Shared Memory —102  
Secure Operating System —105  
Cache Area —110  
TA —103

write the input data
set Param
set ParamType=INPUT_SHM
1 call a TA entry according to Param and ParamType

2 (Param.size > SHADOW_SIZE_MAX) return an error to the CA

3 allocate the cache area according to the size of the data

4 map the address of the shared memory to a first virtual address space of the secure operating system

5 copy the data

6 map the cache area to a second virtual address space used by the TA

7 update the address of the data in the shared memory carried in the call parameter to the virtual address of the data in the second virtual address space

8 use the updated Param and ParamType to run the TA entry

9 check ParamType

10 obtain the data

11 end

12 release

11 return to the CA

101 — CA  
Shared Memory —102  
Secure Operating System —105  
Cache Area —110  
TA —103

# FIG. 5

101 CA
1 write the input data
2 set Param
3 set ParamType=INPUT_SHM | ZEROCOPY
4 call a TA entry according to Param and ParamType
10 return to the CA

102 Shared Memory

105 Secure Operating System
map the address of the shared memory to the second virtual address
5 space used by the TA
run the TA entry according
6 to Param and ParamType
obtain the
8 data
9 end

103 TA
check ParamType by
7 using ZEROCOPY mark

101 CA
102 Shared Memory
103 TA
105 Secure Operating System

# FIG. 6

500

Cache Management Unit 510

Processing Unit 520

# FIG. 7

600

Storage 610

Processor 620

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018113817 A1

- US 2017068455 A1

**Non-patent literature cited in the description**

- **VAN BULCK JO et al.** A Tale of Two Worlds: Assessing the Vulnerability of Enclave Shielding Runtimes. *Designing Interactive Systems Conference*, 06 November 2019